# EUROPEAN PATENT APPLICATION

(11) **EP 4 369 128 A1**
(43) Date of publication of application: **15.05.2024**
(21) Application number: 22837762.8
(22) Date of filing: 08.07.2022
(51) Int. Cl.: G05B 23/02, F24F 11/46, F24F 11/54, F24F 11/64, F24F 11/70, F24F 140/00, F24F 140/60

(54) **OUTPUT SYSTEM, OUTPUT METHOD, OUTPUT PROGRAM, AND COMPUTER-READABLE RECORDING MEDIUM RECORDING OUTPUT PROGRAM**

(30) Priority: 08.07.2021 JP 2021113373; 30.09.2021 JP 2021161501; 24.06.2022 JP 2022102057
(71) Applicant: DAIKIN INDUSTRIES, LTD., Osaka-Shi, Osaka 530-0001 (JP)
(72) Inventor: NISHIMURA, Tadafumi, Osaka-shi, Osaka 530-0001 (JP); IZUMI, Yuta, Osaka-shi, Osaka 530-0001 (JP); MORITA, Hiroshi, Suita-shi, Osaka 565-0871 (JP); SHIBATA, Takuma, Suita-shi, Osaka 565-0871 (JP)
(74) Representative: Global IP Europe Patentanwaltskanzlei
(86) International application number: PCT/JP2022/027109
(87) International publication number: WO 2023/282348

(57) **Abstract**

There is a problem that it is not sufficient to evaluate the cost on the basis of the system configuration related to the air conditioner. An output system (1) outputs a system configuration of an environmental control system (100) controlling an environment of a target space (91) in a target building (90). The output system (1) includes a selection unit (11), a calculation unit (12), and an output unit (14). The selection unit (11) selects a plurality of candidates for each of the system configuration and the operation condition of the environmental control system. The calculation unit (12) calculates a PMV and a total cost for the combination of the system configuration candidate and the operation condition candidate that are selected by the selection unit (11). The output unit (14) outputs a system configuration corresponding to the PMV and the total cost where the objective function is minimum among the PMVs and the total costs calculated by the calculation unit (12).

## Description

### TECHNICAL FIELD

The present invention relates to an output system, an output method, an output program, and a computer-readable recording medium with the output program recorded therein.

### BACKGROUND ART

As disclosed in PTL 1 (Japanese Unexamined Patent Publication No. 2009-20640), there is a technique for outputting a system configuration with which the cost is reduced from among a plurality of system configurations related to air conditioners.

### SUMMARY OF THE INVENTION

### <Technical Problem>

The cost depends not only on the system configuration but also on the operation conditions. Therefore, there is a problem that it is not sufficient to evaluate the cost on the basis of the system configuration as in PTL 1.

### <Solution to Problem>

An output system according to a first aspect outputs a system configuration of an environmental control system controlling an environment of a target space in a target building. The output system includes a selection unit, a calculation unit, and an output unit. The selection unit selects a plurality of candidates for each of the system configuration and the operation condition of the environmental control system. The calculation unit calculates an environmental index and a cost for a combination of a candidate for the system configuration and a candidate for the operation condition that are selected by the selection unit. The output unit outputs the system configuration such that the environmental index and the cost that are calculated by the calculation unit satisfy a predetermined condition.

In a determination system according to the first aspect, the calculation unit calculates an environmental index and a cost for a combination of the system configuration candidate and the operation condition candidate that are selected by the selection unit. The output unit outputs the system configuration such that the environmental index and the cost that are calculated by the calculation unit satisfy a predetermined condition. As a result, the output system can evaluate the cost on the basis of not only the system configuration but also the operation condition.

An output system according to a second aspect is the output system according to the first aspect, in which the output unit further outputs the operation condition such that the environmental index and the cost that are calculated by the calculation unit satisfy the predetermined condition.

An output system of a third aspect is the output system of the first aspect or the second aspect, wherein the system configuration includes a configuration related to the facility equipment installed in the target building, and a configuration related to the target building. The facility equipment includes the air conditioner.

An output system according to a fourth aspect is the output system according to the third aspect, in which the facility equipment further includes a sunlight shielding device, a lighting device, or a heating device.

An output system according to a fifth aspect is the output system according to the third aspect or the fourth aspect, in which the operation condition includes a condition related to an operation schedule of the facility equipment, a condition related to the environmental target setting of the air conditioner, a condition related to the maintenance of the facility equipment, or a condition related to the maintenance of a building member of the target building.

An output system according to a sixth aspect is the output system according to any one of the third aspect to the fifth aspect, in which the output unit outputs the system configuration and the operation condition so as to further satisfy at least one of conditions among a condition related to capacity or performance of the air conditioner, a condition related to a connection configuration of the air conditioner, and a condition related to performance of a building member of the target building.

An output system according to a seventh aspect is the output system according to any one of the third aspect to the sixth aspect, in which the cost includes values correlated with an electricity rate, an introduction cost of the facility equipment, a maintenance cost of the facility equipment, an introduction cost of a building member of the target building, or a maintenance cost of the building member of the target building.

An output system according to an eighth aspect is the output system according to any one of the first aspect to the seventh aspect, in which the environmental index is an index related to thermal comfort, a temperature, a humidity, an airflow, cleanliness, or thermal radiation.

An output system according to a ninth aspect is the output system according to any one of the first aspect to the eighth aspect, in which the predetermined condition satisfied by the cost is a condition for outputting the system configuration and the operation condition with which the cost is reduced.

With such a configuration, the output system according to the ninth aspect can output a system configuration and an operation condition with which the cost is reduced.

An output system according to a tenth aspect is the output system according to any one of the third aspect to the seventh aspect, in which the selection unit alternately selects a plurality of candidates for an air-conditioning configuration as a configuration related to the air conditioner and a plurality of candidates for the operation condition.

An output system according to an eleventh aspect is the output system according to the tenth aspect, further including a storage unit. The selection unit selects a plurality of first candidates for the air-conditioning configuration as a configuration related to the air conditioner. The calculation unit calculates a first environmental index and a first cost for a combination of the plurality of first candidates selected by the selection unit and a candidate including the operation condition that is predetermined. The storage unit stores the plurality of first candidates and each of the first environmental index and the first cost in an associated manner. The output unit outputs a first air-conditioning configuration such that the first environmental index and the first cost that are stored in the storage unit satisfy the predetermined condition. In the environmental control system to which the first air-conditioning configuration is applied, the selection unit selects a plurality of second candidates including an operation condition. The calculation unit calculates a second environmental index and a second cost for a combination of the plurality of second candidates selected by the selection unit and a candidate including the first air-conditioning configuration. The storage unit stores the plurality of second candidates and each of the second environmental index and the second cost in an associated manner. The output unit outputs a candidate including a first operation condition such that the second environmental index and the second cost that are stored in the storage unit satisfy the predetermined condition. In the environmental control system to which the candidate including the first operation condition is applied, the selection unit selects a plurality of third candidates for the air-conditioning configuration. The calculation unit calculates a third environmental index and a third cost for a combination of the plurality of third candidates selected by the selection unit and the candidate including the first operation condition. The storage unit stores the plurality of third candidates and each of the third environmental index and the third cost in an associated manner. The output unit outputs a second air-conditioning configuration such that the third environmental index and the third cost that are stored in the storage unit satisfy the predetermined condition.

An output system according to a twelfth aspect is the output system according to the eleventh aspect, in which the candidate including the operation condition includes a configuration related to the facility equipment except for the air conditioner, a building structure, an operation condition related to the facility equipment except for the air conditioner, and an operation condition related to the building structure.

In an output system according to a thirteenth aspect is the output system according to the eleventh aspect or the twelfth aspect, in which the selection unit selects a plurality of candidates for the air-conditioning configuration by a local search method. The selection unit selects a plurality of candidates including the operation condition by Bayesian optimization.

The output system according to the thirteenth aspect can efficiently solve the optimization problem by selectively using the optimization algorithm in accordance with the calculation cost.

An output system according to a fourteenth aspect is the output system according to any one of the eleventh aspect to the thirteenth aspect, further including an extraction unit. The extraction unit extracts a date and time on which the environmental index and the cost become a predetermined value. In the environmental control system to which the first air-conditioning configuration is applied, the calculation unit calculates a fourth environmental index and a fourth cost for the combination of the first air-conditioning configuration and the candidate including the operation condition. The extraction unit extracts a first date and time on which the fourth environmental index and the fourth cost that are calculated by the calculation unit become a predetermined value. The selection unit selects a plurality of second candidates including the operation condition on the first date and time.

With such a configuration, the output system according to the fourteenth aspect can solve the optimization problem more efficiently.

An output method according to a fifteenth aspect outputs a system configuration of an environmental control system controlling an environment of a target space in a target building. The output method includes a selection step, a calculation step, and an output step. The selection step selects a plurality of candidates for each of the system configuration and the operation condition of the environmental control system. The calculation step calculates an environmental index and a cost for a combination of a candidate for the system configuration and a candidate for the operation condition that are selected at the selection step. The output step outputs the system configuration such that the environmental index and the cost that are calculated at the calculation step satisfy a predetermined condition.

An output method according to a sixteenth aspect is the output method according to the fifteenth aspect, in which the output step further outputs the operation condition such that the environmental index and the cost that are calculated at the calculation step satisfy the predetermined condition.

An output method according to a seventeenth aspect is the output method according to the sixteenth aspect, further including a storage step. The system configuration includes a configuration related to the facility equipment installed in the target building and a configuration related to the target building. The facility equipment includes the air conditioner. The selection step selects a plurality of first candidates for the air-conditioning configuration as a configuration related to the air conditioner. The calculation step calculates a first environmental index and a first cost for a combination of the plurality of first candidates selected at the selection step and a candidate including the operation condition that is predetermined. The storage step stores the plurality of first candidates and each of the first environmental index and the first cost in an associated manner. The output step outputs a first air-conditioning configuration such that the first environmental index and the first cost that are stored in the storage step satisfy the predetermined condition. In the environmental control system to which the first air-conditioning configuration is applied, the selection step selects a plurality of second candidates including an operation condition. The calculation step calculates a second environmental index and a second cost for a combination of the plurality of second candidates selected at the selection step and a candidate including the first air-conditioning configuration. The storage step stores the plurality of second candidates and each of the second environmental index and the second cost in an associated manner. The output step outputs a candidate including the first operation condition such that the second environmental index and the second cost that are stored in the storage step satisfy the predetermined condition.

An output program according to an eighteenth aspect causes a computer to output a system configuration of an environmental control system controlling an environment of a target space in a target building. The output program includes a selection step, a calculation step, and an output step. The selection step selects a plurality of candidates for each of the system configuration and the operation condition of the environmental control system. The calculation step calculates an environmental index and a cost for a combination of a candidate for the system configuration and a candidate for the operation condition that are selected at the selection step. The output step outputs the system configuration such that the environmental index and the cost that are calculated at the calculation step satisfy a predetermined condition.

An output program according to a nineteenth aspect is the output program according to the eighteenth aspect, in which the output step further outputs the operation condition such that the environmental index and the cost that are calculated at the calculation step satisfy the predetermined condition.

A computer-readable recording medium with an output program recorded therein according to a twentieth aspect records an output program causing a computer to output a system configuration of an environmental control system controlling an environment of a target space in a target building. The output program includes a selection step, a calculation step, and an output step. The selection step selects a plurality of candidates for each of the system configuration and the operation condition of the environmental control system. The calculation step calculates an environmental index and a cost for a combination of a candidate for the system configuration and a candidate for the operation condition that are selected at the selection step. The output step outputs the system configuration such that the environmental index and the cost that are calculated at the calculation step satisfy a predetermined condition.

The computer-readable recording medium with an output program recorded therein according to a twenty-first aspect is the computer-readable recording medium with an output program recorded therein according to the twentieth aspect, in which the output step further outputs the operation condition such that the environmental index and the cost that are calculated at the calculation step satisfy the predetermined condition.

### BRIEF DESCRIPTION OF THE DRAWINGS

Fig. 1 is a diagram illustrating an example of the combination of system configurations.
Fig. 2 is a functional block diagram of an output system.
Fig. 3A is a diagram for explaining a local search method.
Fig. 3B1 is a diagram for explaining Bayesian optimization.

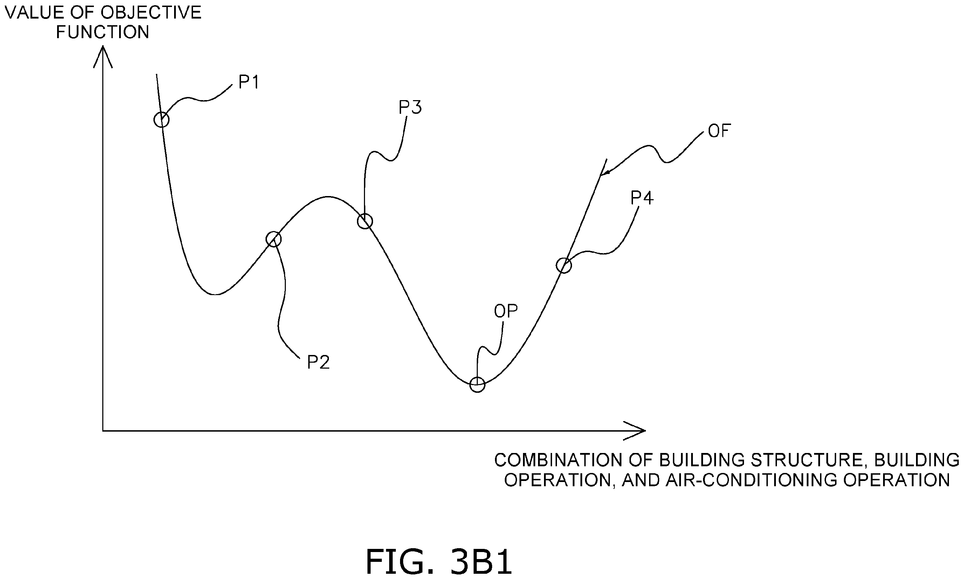

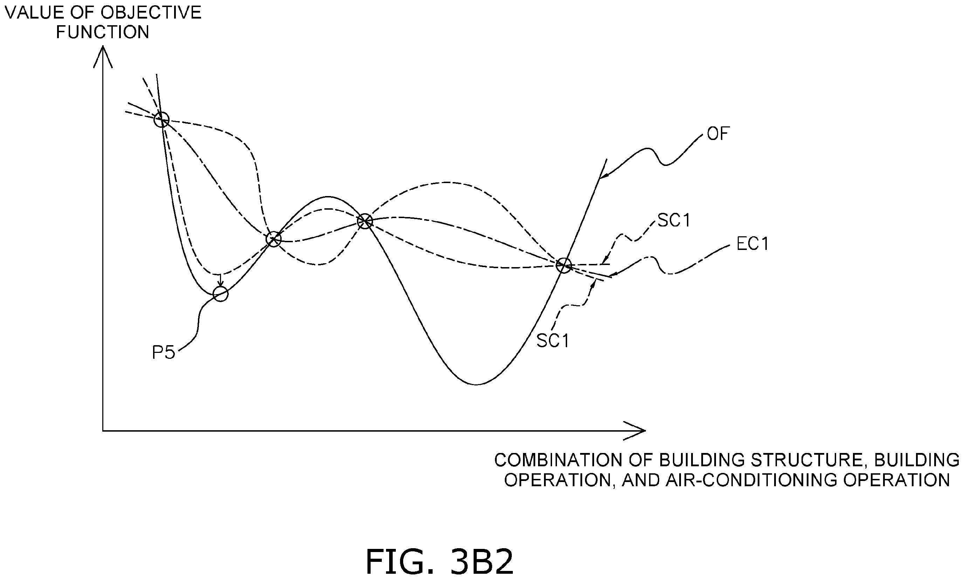

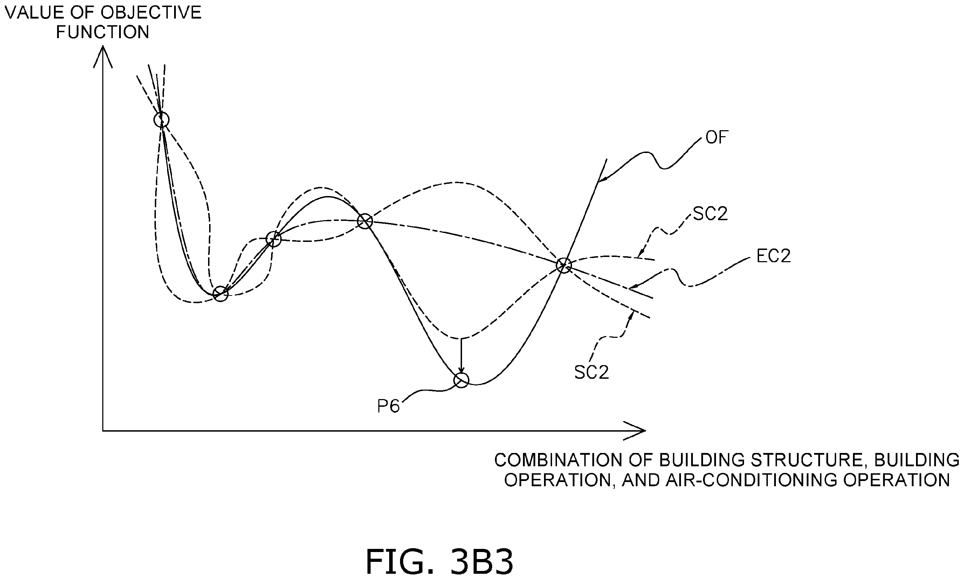

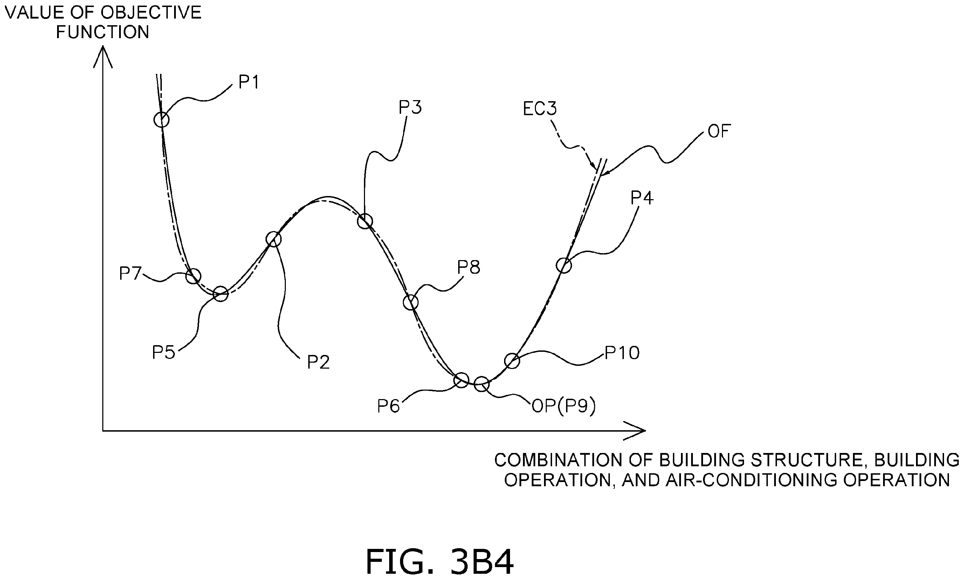

Fig. 3B2 is a diagram for explaining Bayesian optimization.
Fig. 3B3 is a diagram for explaining Bayesian optimization.
Fig. 3B4 is a diagram for explaining Bayesian optimization.

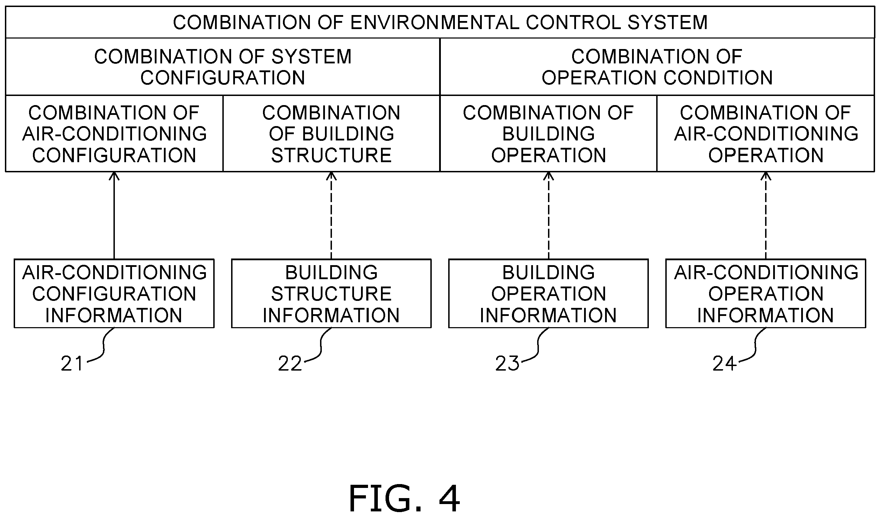

Fig. 4 is a diagram illustrating a data flow of a selection unit.

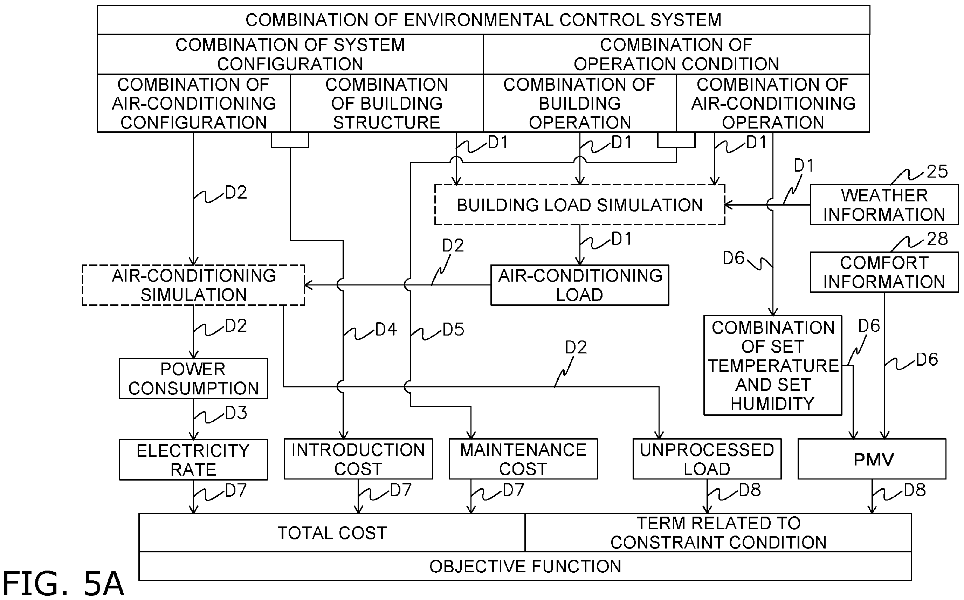

Fig. 5A is a data flow diagram of a calculation unit in the case of optimizing an air-conditioning configuration.

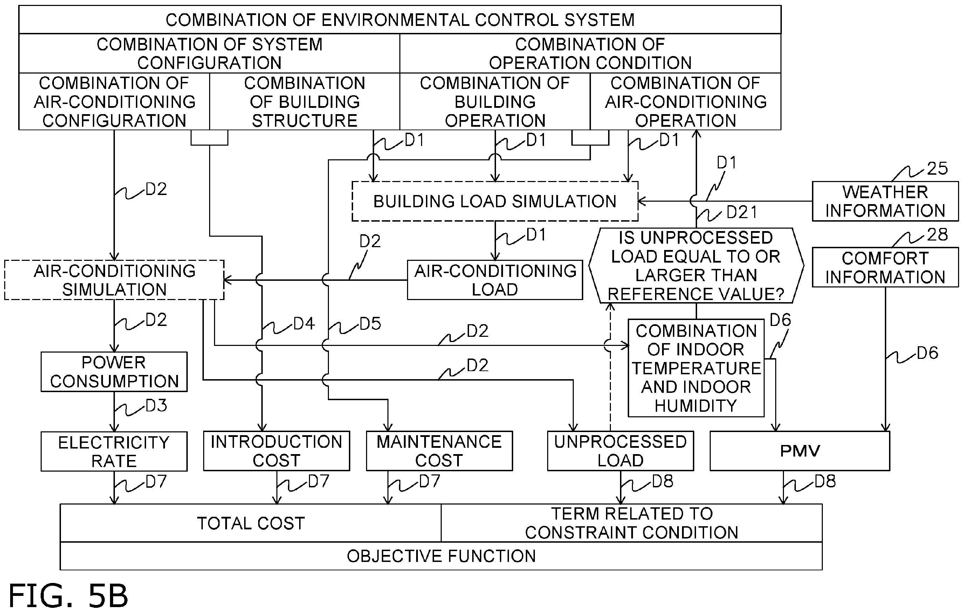

Fig. 5B is a data flow diagram of a calculation unit in the case of optimizing a building structure, a building operation, and an air-conditioning operation.

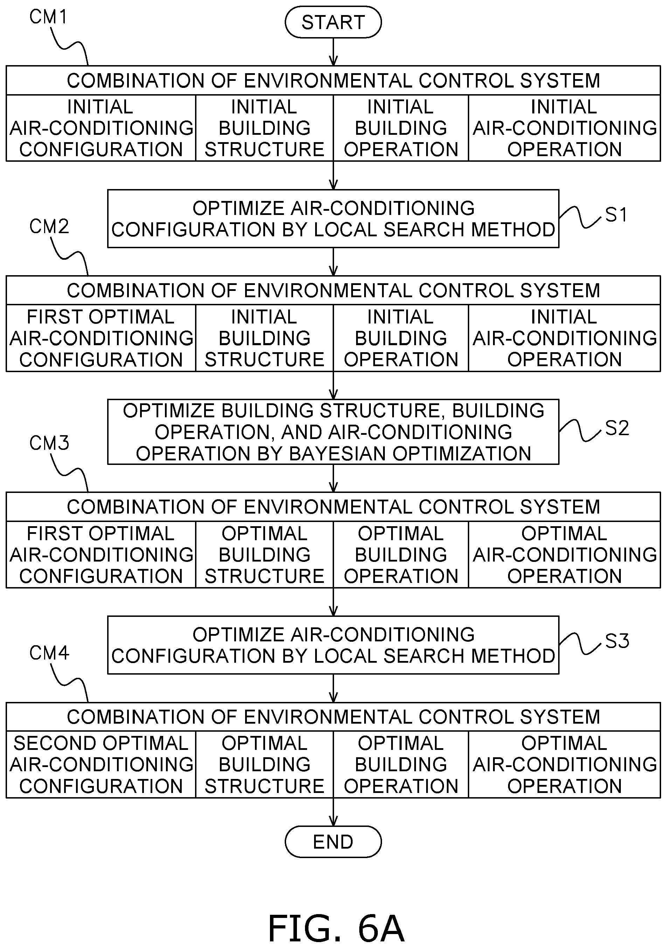

Fig. 6A is a flowchart of output system optimization processing.

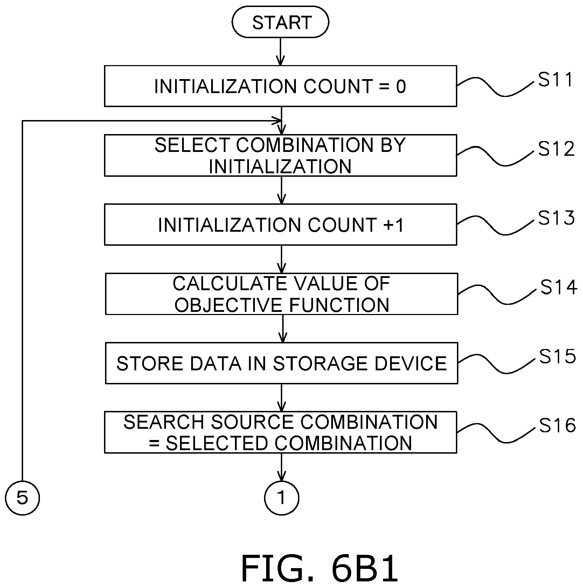

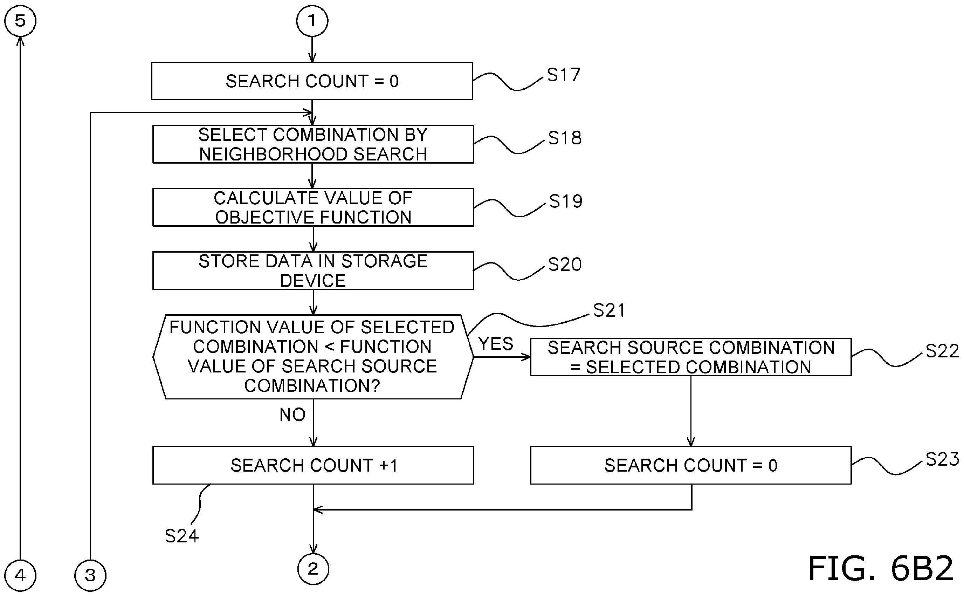

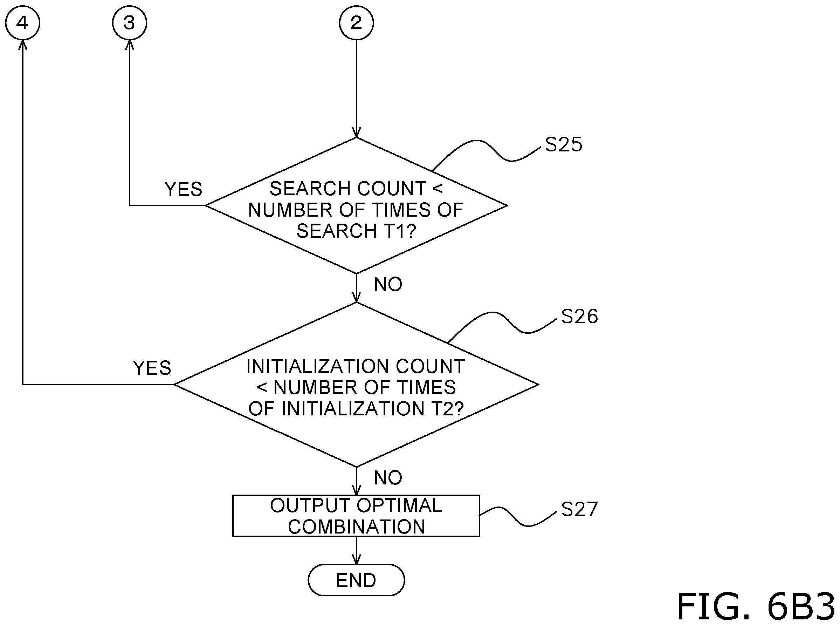

Fig. 6B1 is a flowchart of the local search method in the output system optimization processing.
Fig. 6B2 is a flowchart of the local search method in the output system optimization processing.
Fig. 6B3 is a flowchart of the local search method in the output system optimization processing.

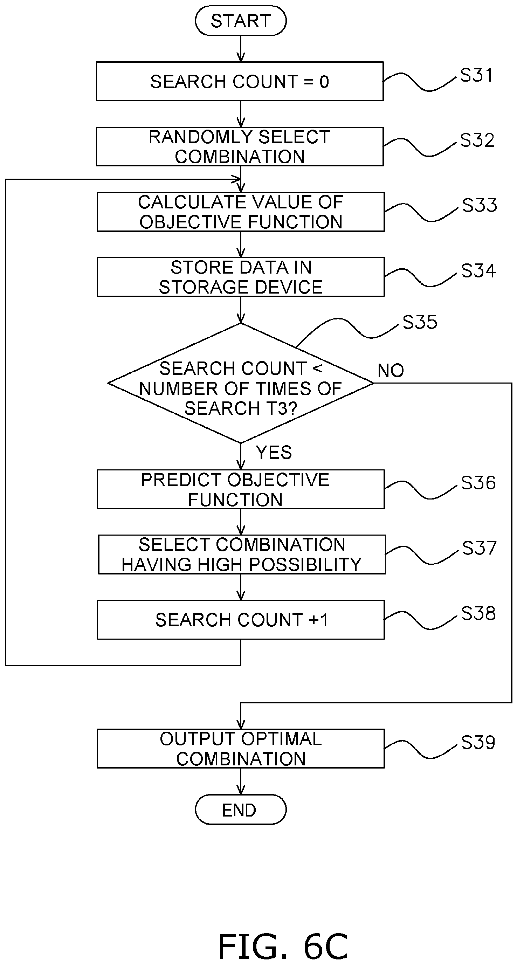

Fig. 6C is a flowchart of a Bayesian optimization in the output system optimization processing.

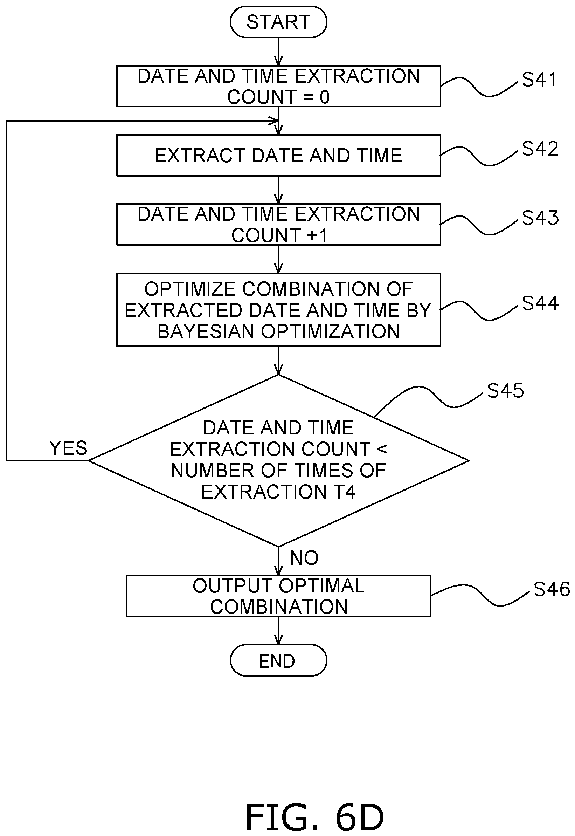

Fig. 6D is a flowchart of the Bayesian optimization in Modification 1C.

### DESCRIPTION OF EMBODIMENTS

### (1) Overview of output system

The output system 1 is a system that outputs a configuration of an environmental control system 100 where the total cost and the environmental index are optimal in the environmental control system 100. The configuration of the environmental control system 100 is determined by the system configurations of the environmental control system 100 (hereinafter, may simply be referred to as the system configuration) and the operation conditions of the environmental control system 100 (hereinafter, may simply be referred to as the operation condition). A plurality of combination candidates are considered for each of the system configuration and the operation condition. When one combination of system configurations is determined, and one combination of operation conditions is determined, one combination of configurations of the environmental control system 100 (hereinafter, may be referred to as the combination of the environmental control system 100) is determined. When one combination of the environmental control system 100 is determined, the total cost and the environmental index for this combination of the environmental control system 100 are calculated. The output system 1 outputs the combination of the environmental control system 100 that optimizes the total cost and the environmental index of the environmental control system 100. In other words, the output system 1 is a system for solving an optimization problem using the combination of the environmental control system 100 as a parameter.

In the present embodiment, an index related to the thermal comfort is used as an environmental index. The index related to the thermal comfort in the present embodiment is a predicted mean vote (PMV).

### (2) Environmental control system

The environmental control system 100 controls the environment of a target space 91 in a target building 90. The target building 90 is, for example, an office building, a commercial building, or the like. The target space 91 is, for example, an office space, a computer room, or the like.

### (2-1) System configuration

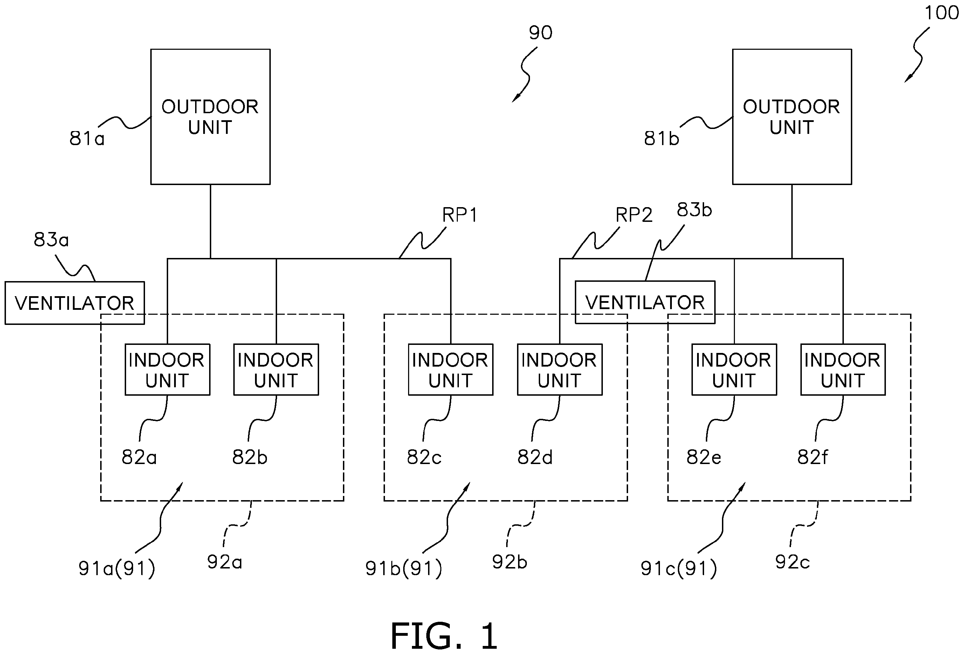

The system configuration of the environmental control system 100 includes a configuration related to the facility equipment installed in the target building 90. In the present embodiment, the facility equipment includes an air conditioner, a sunlight shielding device, a lighting device, and a heating device. The air conditioner in the present embodiment includes an indoor unit, an outdoor unit, and a ventilator. However, the air conditioner is not limited thereto, and may further include a chiller, a refrigerating machine, a cooling tower, a boiler, an air handling unit (AHU), a fan coil unit (FCU), a roof top unit (RTU), an outdoor air handling unit, and the like. The sunlight shielding device is, for example, a window shade or the like. The lighting device is, for example, a ceiling light or the like. The heating device is, for example, an OA device. In the present embodiment, only the configuration related to the air conditioner (hereinafter, may be referred to as the air-conditioning configuration) is optimized as the configuration related to the facility equipment. In the present embodiment, the configurations related to the sunlight shielding device, the lighting device, and the heating device are not changed and are fixed in predetermined configurations. The combination of the air-conditioning configuration is, for example, the combination of the arrangement configurations indicating which indoor unit is installed in which target space 91, or the combination of the connection configurations indicating which indoor unit and which outdoor unit are connected. Fig. 1 is a diagram illustrating an example of the combination of the system configuration. The environmental control system 100 in Fig. 1 includes two outdoor units 81a and 81b, six indoor units 82a to 82f, and two ventilators 83a and 83b. The outdoor units 81a and 81b are connected to three indoor units 82a to 82c and 82d to 82f through refrigerant pipes RP1 and RP2, respectively. The indoor units 82a and 82b are installed in a target space 91a, and perform air-conditioning of the target space 91a in conjunction with the outdoor unit 81a. The indoor units 82c and 82d are installed in a target space 91b, and perform air-conditioning of the target space 91b in conjunction with the outdoor units 81a and 81b, respectively. The indoor units 82e and 82f are installed in a target space 91c, and perform air-conditioning of the target space 90c in conjunction with the outdoor unit 81b. The ventilator 83a is installed in the target space 91a, and ventilates the target space 91a, respectively. The ventilator 83b is installed to serve for both the target spaces 91b and 91c, and ventilates the target spaces 90b and 90c. Such a combination of the arrangement configurations of the air conditioners and a combination of the connection configurations of the air conditioners form one combination of the air-conditioning configuration. The air-conditioning configuration combination candidates are stored in a storage device 20 of the output system 1 as air-conditioning configuration information 21, prior to the optimization processing.

Further, the system configuration of the environmental control system 100 includes a configuration related to the target building 90. The combination of the configurations related to the target building 90 (hereinafter, may be referred to as the building structure) includes the combination of building members of the target building 90. The building member of the target building 90 is, for example, a wall material forming the target space 91. In Fig. 1, the target space 91a is formed by a wall material 92a. The target space 91b is formed by a wall material 92b. The target space 91c is formed by a wall material 92c. Such a combination of building members of the target building 90 forms one combination of the building structure. The building structure combination candidates are stored in the storage device 20 of the output system 1 as building structure information 22, prior to the optimization processing. The combinations of building structures may include, for example, combinations related to the shape of the target building 90, an adjacent building, the division of the target space 91, and the like.

### (2-2) Operation conditions

The operation conditions of the environmental control system 100 include a condition related to the operation schedule of the facility equipment, a condition related to the environmental target setting of the air conditioner, a condition related to the maintenance of the facility equipment, and a condition related to the maintenance of the building member of the target building 90.

The condition related to the operation schedule of the facility equipment is determined for each date and time in a predetermined period and for each facility equipment. The predetermined period is, for example, one year. The "each date and time" is, for example, each hour.

In a case where the facility equipment is an air conditioner, the combination of conditions related to the operation schedule of the facility equipment is, for example, a combination of which air conditioner is to be activated or stopped on which date and time in a predetermined period. In a case where the facility equipment is an air conditioner, the combination candidates for the conditions related to the operation schedule of the facility equipment are stored in the storage device 20 of the output system 1 as air-conditioning operation information 24, prior to the optimization processing.

In a case where the facility equipment is a sunlight shielding device, a lighting device, or a heating device, the combination of conditions related to the operation schedule of the facility equipment is, for example, a combination of which sunlight shielding device is to be operated on which date and time in a predetermined period. In a case where the facility equipment is a sunlight shielding device, a lighting device, or a heating device, the combination candidates for the conditions related to the operation schedule of the facility equipment are stored in the storage device 20 of the output system 1 as building operation information 23, prior to the optimization processing.

The condition related to the environmental target setting of the air conditioner is determined for each date and time in a predetermined period and for each air conditioner. The combination of conditions related to the environmental target setting of the air conditioner is, for example, a combination of which indoor unit and outdoor unit are to be operated on which date and time in a predetermined period and at which set temperature and set humidity. In addition, the combination of conditions related to the environmental target setting of the air conditioner is, for example, a combination of which ventilator is to be operated on which date and time in a predetermined period and at which set ventilation amount. The combination candidates for the conditions related to the environmental target setting of the air conditioner are stored in the storage device 20 of the output system 1 as the air-conditioning operation information 24, prior to the optimization processing.

The condition related to the maintenance of the facility equipment is determined for each facility equipment in a predetermined period.

In a case where the facility equipment is an air conditioner, the combination of conditions related to the maintenance of the facility equipment is, for example, a combination of on which data and time in a predetermined period the maintenance is performed on which air conditioner. In a case where the facility equipment is an air conditioner, the combination candidates for the conditions related to the maintenance of the facility equipment are stored in the storage device 20 of the output system 1 as the air-conditioning operation information 24, prior to the optimization processing.

In a case where the facility equipment is a sunlight shielding device, a lighting device, or a heating device, the combination of conditions related to the maintenance of the facility equipment is, for example, a combination of on which data and time in a predetermined period the maintenance is performed on which sunlight shielding device. In a case where the facility equipment is a sunlight shielding device, a lighting device, or a heating device, the combination candidates for the conditions related to the maintenance of the facility equipment are stored in the storage device 20 of the output system 1 as the building operation information 23, prior to the optimization processing.

The condition related to the maintenance of the building member of the target building 90 is determined for each building member in a predetermined period. The combination of the conditions related to the maintenance of the building member of the target building 90 is, for example, a combination of on which date and time in a predetermined period the maintenance is performed on which wall material. The combination candidates for the conditions related to the maintenance of the building member of the target building 90 are stored in the storage device 20 of the output system 1 as the building operation information 23, prior to the optimization processing.

### (3) Configuration of output system

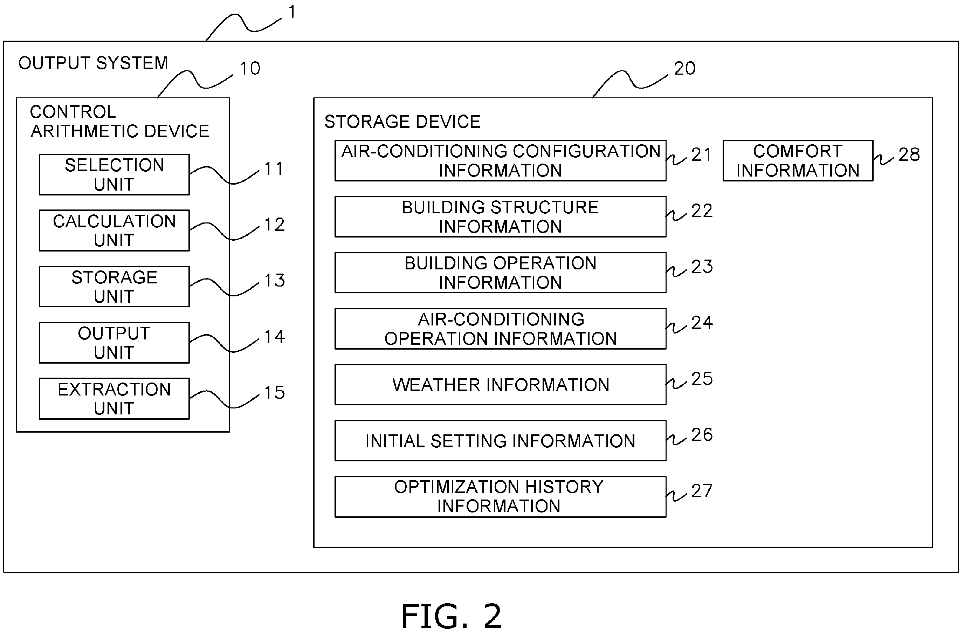

The output system 1 includes one or a plurality of computers. Fig. 2 is a functional block diagram of the output system 1. As illustrated in Fig. 2, the output system 1 includes a control arithmetic device 10 and the storage device 20. The control arithmetic device 10 is a processor such as a CPU or a GPU. The storage device 20 is a storage medium such as a RAM, a ROM, or a flash memory. The control arithmetic device 10 reads out programs (including an output program) stored in the storage device 20 and performs predetermined arithmetic processing in accordance with the programs. Further, the control arithmetic device 10 can write arithmetic results to the storage device 20 and read out information stored in the storage device 20 in accordance with the programs. Moreover, a general applications such as a Web browser or a mailer are installed in the storage device 20.

Furthermore, the output system 1 includes an input device (not illustrated) and an output device (not illustrated). The input device is, for example, a keyboard, a mouse, or the like. The output device is, for example, a monitor.

As illustrated in Fig. 2, the control arithmetic device 10 includes, as functional blocks, a selection unit 11, a calculation unit 12, a storage unit 13, and an output unit 14. The selection unit 11, the calculation unit 12, the storage unit 13, and the output unit 14 mainly function to solve the optimization problem of the environmental control system 100.

### (3-1) Optimization problem

In the optimization problem, an objective function is defined. The objective function is a function of the combination of the environmental control system 100, and serves as an index of "optimal". The output system 1 outputs a combination of the environmental control system 100 so that the value of the objective function is minimum. In the present embodiment, the combination of the environmental control system 100 includes the combination of system configurations and the combination of operation conditions. In the combination of system configurations, variable combinations are the combinations of the air-conditioning configuration and the combination of the building structure. In the combination of operation conditions, variable combinations are the combination of the air-conditioning operation and the combination of the building operation.

The objective function in the present embodiment is the sum of the total cost and the term related to the constraint conditions.

The total cost is the sum of a term indicating the electricity rate of the environmental control system 100, a term indicating the introduction cost of the facility equipment, a term indicating the maintenance cost of the facility equipment, a term indicating the introduction cost of the building member of the target building 90, and a term indicating the maintenance cost of the building member of the target building 90. The smaller the total cost, the smaller the value of the objective function.

The term related to the constraint conditions is the sum of a term indicating the constraint condition related to the PMV and a term indicating the constraint condition related to an unprocessed load. Each term is configured such that the value of the term is smaller as each constraint condition is satisfied. In other words, the more each term satisfies each constraint condition, the smaller the value of the objective function. The term indicating the constraint condition related to the PMV is configured such that the value of the term is smaller as the PMV calculated from the combination of the environmental control system 100 falls within a specified range. The term indicating the constraint condition related to the unprocessed load is configured such that the value of the term is smaller as the unprocessed load calculated from the combination of the environmental control system 100 is smaller than a reference value.

Outputting the combination of the environmental control system 100 that minimizes the objective function corresponds to outputting the combination of the environmental control system 100 that minimizes the total cost while satisfying the constraint conditions. In other words, outputting the combination of the environmental control system 100 that minimizes the objective function corresponds to outputting the combination of the environmental control system 100 that optimizes the total cost and PMV of the environmental control system 100.

In the present embodiment, simulation is used to calculate the objective function. Therefore, the obj ective function of the present embodiment cannot be expressed mathematically. The optimization problem of the present embodiment corresponds to a so-called black box optimization problem with constraint conditions. Examples of the method for solving the black box optimization problem with constraint conditions include the local search method and the Bayesian optimization. The local search method has characteristics that the number of times of search before reaching an optimal combination is larger than that in the Bayesian optimization but the calculation cost for outputting a combination to be searched next is lower. On the other hand, the Bayesian optimization has characteristics that the number of times of search before reaching an optimal combination is smaller than that in the local search method but the calculation cost for outputting a combination to be searched next is larger.

Meanwhile, because of the characteristics of the simulation used in the present embodiment, the calculation cost of the objective function when the combinations of the building structure, the air-conditioning operation, and the building operation are changed is higher than the calculation cost of the objective function when only the combination of the air-conditioning configuration is changed.

Therefore, in the present embodiment, the air-conditioning configuration, the building structure, the air-conditioning operation, and the building operation are alternately optimized by different methods. Specifically, the air-conditioning configuration is optimized by the local search method. While the air-conditioning configuration is optimized, the building structure, the air-conditioning operation, and the building operation are fixed in one certain combination. Moreover, the building structure, the air-conditioning operation, and the building operation are optimized by the Bayesian optimization. While the building structure, the air-conditioning operation, and the building operation are optimized, the air-conditioning configuration is fixed in one certain combination.

Hereinafter, the local search method and the Bayesian optimization will be described.

### (3-1-1) Local search method

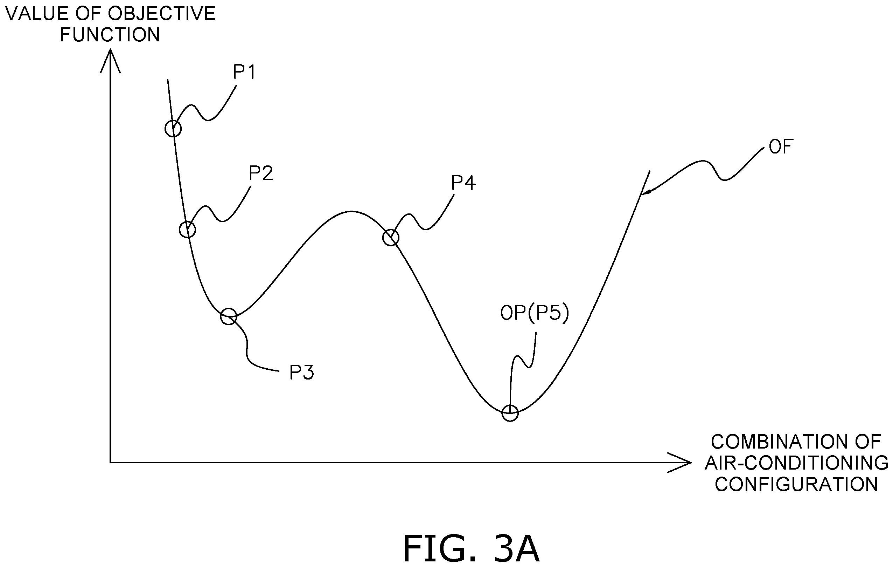

Fig. 3A is a diagram for explaining the local search method. In Fig. 3A, the horizontal axis represents the combination of the air-conditioning configuration, the vertical axis represents the value of the objective function, and the curve OF represents the objective function. In the present embodiment, when the combination of the air-conditioning configuration is optimized by the local search method, the objective function is substantially a function of the combination of the air-conditioning configuration because the combinations of the building structure, the air-conditioning operation, and the building operation are fixed.

The closeness in the horizontal axis direction represents the closeness of the combinations of the air-conditioning configuration. Therefore, continuously changing the combination of the air-conditioning configuration in the horizontal axis direction indicates gradually changing the configuration of the combination of the air-conditioning configuration.

Since the optimization problem of the present embodiment is a black box optimization problem, the form of the objective function is originally unknown, but is shown for convenience of explanation. The object of the optimization problem is to find the combination of the point OP on the curve OF where the value of the objective function is minimal.

In the local search method, one combination is selected first at random. Hereinafter, unlike the neighborhood search described later, selecting one combination at random is referred to as initialization. Moreover, even in the case of initialization or in the case of the neighborhood search described later, the selected combination is stored in the storage device 20 with the value of the objective function in an associated manner. Here, it is assumed that the initialized combination is the point P1 in Fig. 3A. The initialized combination is set as a search source combination because it is a source for searching for other combinations. Here, the combination of the point P1 is set as the search source combination.

Next, in the local search method, the configuration of the search source combination is slightly changed so as to search for a new combination. Hereinafter, this search is referred to as the neighborhood search. If the value of the objective function of the combination selected by the neighborhood search is smaller than the value of the objective function of the search source combination, the combination selected by the neighborhood search is set as the search source combination, and the next neighborhood search is performed. On the other hand, if the value of the objective function of the combination selected by the neighborhood search is equal to or larger than the value of the objective function of the search source combination, the search source combination is not updated, and the next neighborhood search is performed.

When this neighborhood search is repeated to some extent, the search source combination, which is initially the combination of the point P1 in Fig. 3A, moves so as to roll on the curve to the combination of the point P2, and eventually to the combination of the point P3. The value of the objective function for the combination of the point P3 is a local minimum value. Therefore, once the search source combination becomes the combination of the point P3, a combination having a smaller value of the objective function cannot be found even if the neighborhood search is further repeated. Then, in the local search method, the initialization is performed again with the fact, as a trigger, that the search source combination is not changed even when the neighborhood search is repeated a predetermined number of times (hereinafter, may be referred to as the number of times of search T1). Here, it is assumed that the initialized combination is the point P4 in Fig. 3A. Here, the combination of the point P4 is set as the search source combination.

Thereafter, when the neighborhood search is repeated in the same manner, the search source combination becomes the combination of the point P5 in Fig. 3A. Once the search source combination becomes the combination of the point P5, a combination having a smaller value of the objective function cannot be found even if the neighborhood search is further repeated. Thus, the initialization is performed again in the local search method.

In the local search method, when the initialization is repeated a predetermined number of times (hereinafter, may be referred to as the number of times of initialization T2), the combination search is finished.

Finally, in the local search method, the combination having the minimum value of the objective function is output as the optimal combination from the data associating the selected combination and the value of the objective function thereof, which is stored in the storage device 20. In Fig. 3A, the combination of the point P5 is output as the optimal combination.

### (3-1-2) Bayesian optimization

Figs. 3B1 to 3B4 are diagrams for explaining the Bayesian optimization. The horizontal axis in Figs. 3B1 to 3B4 represents the combination of the building structure, the air-conditioning operation, and the building operation. In the present embodiment, when the combination of the building structure, the air-conditioning operation, and the building operation is optimized by the Bayesian optimization, the objective function is substantially a function of the combination of the building structure, the air-conditioning operation, and the building operation because the combination of the air-conditioning configuration is fixed.

The object of the optimization problem is to find the combination of the point OP on the curve OF where the value of the objective function is minimal in Fig. 3B1.

In the Bayesian optimization, a plurality of combinations are selected first at random. Also in the Bayesian optimization, the selected combination is stored in the storage device 20 with the value of the objective function in an associated manner. In Fig. 3B1, the points P1 to P4 are shown as four combinations selected at random.

Next, in the Bayesian optimization, an objective function (curve OF) is predicted using the Gaussian process from these four combinations. In Fig. 3B2, the objective function is predicted by a curve EC1 (dot-and-dash line curve) representing the expected value of the objective function and a curve SC1 (broken line curve) representing the standard deviation of the objective function. In the Bayesian optimization, the next combination is selected on the basis of the predicted objective function. In the Bayesian optimization, for example, a combination having a possibility that the value of the objective function becomes the smallest is selected considering the standard deviation of the predicted objective function. In Fig. 3B2, the point P5 is selected.

Next, in the Bayesian optimization, an objective function (curve OF) is predicted using the Gaussian process from the five combinations selected so far. In Fig. 3B3, the objective function is predicted by a curve EC2 (dot-and-dash line curve) representing the expected value of the objective function and a curve SC2 (broken line curve) representing the standard deviation of the objective function. In the Bayesian optimization, a combination having a possibility that the value of the objective function becomes the smallest is selected in the same manner on the basis of the predicted objective function. In Fig. 3B3, the point P6 is selected.

When such an operation is repeated a predetermined number of times (hereinafter, may be referred to as the number of times of search T3), a curve EC3 (dot-and-dash line curve) representing the expected value of the objective function approaches the objective function (curve OF), as shown in Fig. 3B4. In Fig. 3B4, the points P7 to P10 are further selected.

Finally, in the Bayesian optimization, the combination having the minimum value of the objective function is output as the optimal combination from the data associating the selected combination and the value of the objective function thereof, which is stored in the storage device 20. In Fig. 3B4, the combination of the point P9 is output as the optimal combination.

### (3-2) Storage unit

The storage unit 13 stores various kinds of information in the storage device 20. As shown in Fig. 2, the storage unit 13 stores the air-conditioning configuration information 21, the building structure information 22, the building operation information 23, the air-conditioning operation information 24, weather information 25, initial setting information 26, optimization history information 27, and comfort information 28 in the storage device 20.

The air-conditioning configuration information 21 is information of air-conditioning configuration combination candidates. The storage unit 13 stores the air-conditioning configuration information 21 in the storage device 20 through the input device from a user, for example.

The building structure information 22 is information of building structure combination candidates. The storage unit 13 stores the building structure information 22 in the storage device 20 through the input device from a user, for example.

The building operation information 23 and the air-conditioning operation information 24 are information of operation condition combination candidates. For example, the storage unit 13 stores the building operation information 23 and the air-conditioning operation information 24 in the storage device 20 through the input device from a user.

The weather information 25 is information necessary for calculating an air-conditioning load by building load simulation described later. The weather information 25 is, for example, an outside air temperature, an outside air humidity, an amount of radiation, a wind speed, and the like for each date and time in a predetermined period. The storage unit 13 stores the weather information 25 in the storage device 20 through downloading from an external server, for example.

The initial setting information 26 is information of the initial setting of the optimization processing.

The initial setting information 26 used for optimizing the air-conditioning configuration includes the combinations of the initial building structure, building operation, and air-conditioning operation in the optimization processing, the prescribed range of the PMV, the reference value of the unprocessed load, the number of times of search T1 in the local search method, and the number of times of initialization T2 in the local search method. The storage unit 13 stores the initial setting information 26 used for optimizing the air-conditioning configuration in the storage device 20 through the input device from a user, for example.

The initial setting information 26 used for optimizing the building structure, the building operation, and the air-conditioning operation includes the prescribed range of the PMV, the reference value of the unprocessed load, and the number of times of search T3 in the Bayesian optimization. The storage unit 13 stores the initial setting information 26 used for optimizing the building structure, the building operation, and the air-conditioning operation in the storage device 20 through the input device from a user, for example.

The optimization history information 27 is information in which the combination selected in the process of optimization processing and the value of the objective function thereof are stored in an associated manner. The storage unit 13 stores the selected combination and the value of the objective function thereof in an associated manner during the optimization processing. The storage unit 13 may further store the total cost and the value of the PMV in an associated manner.

The comfort information 28 is information necessary for calculating the PMV The comfort information 28 is, for example, a clothing amount, an activity amount, a wind speed, and the like. The storage unit 13 stores the comfort information 28 in the storage device 20 through the input device from a user, for example.

### (3-3) Selection unit

The selection unit 11 selects a combination candidate of the environmental control system 100 from the air-conditioning configuration information 21, the building structure information 22, the building operation information 23, and the air-conditioning operation information 24 in accordance with a predetermined algorithm. Fig. 4 is a diagram illustrating a data flow of the selection unit 11.

As indicated by a solid arrow in Fig. 4, the selection unit 11 selects, when optimizing the air-conditioning configuration, an air-conditioning configuration combination candidate from the air-conditioning configuration information 21 on the basis of the local search method. As a result, a new combination candidate of the environmental control system 100 in which only the combination of the air-conditioning configuration is changed is selected.

As indicated by broken line arrows in Fig. 4, the selection unit 11 selects, when optimizing the building structure, the air-conditioning operation, and the building operation, combination candidates of the building structure, the building operation, and the air-conditioning operation from the building structure information 22, the building operation information 23, and the air-conditioning operation information 24, respectively, on the basis of the Bayesian optimization. As a result, a new combination candidate of the environmental control system 100 in which only the combinations of the building structure, the building operation, and the air-conditioning operation are changed is selected.

### (3-4) Calculation unit

The calculation unit 12 calculates a value of the objective function for the combination of the environmental control system 100 selected by the selection unit 11.

In the present embodiment, the calculation unit 12 uses a building load simulation and an air-conditioning simulation in the process of calculating the obj ective function. For the simulation calculation, existing simulation software such as "energy +", for example, is used.

In the building load simulation, an air-conditioning load is calculated for each date and time in a predetermined period on the basis of the combination of the building structure, the combination of the building operation, the combination of the air-conditioning operation, and the weather information 25. In other words, in the building load simulation, even if the combination of the air-conditioning configuration is changed, the calculation result is the same as long as the combinations of the building structure, the building operation, and the air-conditioning operation are not changed. Therefore, in the optimization of the air-conditioning configuration in which the building structure, the air-conditioning operation, and the building operation are fixed to one combination, it is sufficient to perform the building load simulation once for the first combination of the environmental control system 100. This is the reason why the calculation cost of the obj ective function when the combinations of the building structure, the air-conditioning operation, and the building operation are changed is higher than the calculation cost of the obj ective function when only the combination of the air-conditioning configuration is changed.

In the air-conditioning simulation, an unprocessed load and the power consumption are calculated for each date and time in a predetermined period from the combination of the air-conditioning load and the air-conditioning configuration for each date and time in the predetermined period, which is calculated by the building load simulation. In the air-conditioning simulation, the indoor temperature and the indoor humidity can be further calculated for each date and time in a predetermined period and for each target space 91. Since the air-conditioning simulation uses the combination of the air-conditioning configuration and the air-conditioning load calculated by the building load simulation, the calculation result is generally different if any of the combination of the air-conditioning configuration, the combination of the building structure, the combination of the building operation, and the combination of the air-conditioning operation is changed.

Hereinafter, the calculation process of the objective function will be described separately for the case of the optimization of the air-conditioning configuration and the case of the optimization of the building structure, the building operation, and the air-conditioning operation.

### (3-4-1) Calculation process of objective function in optimization of air-conditioning configuration

The calculation process of the objective function in the case of optimizing the air-conditioning configuration will be described with reference to the data flow diagram of Fig. 5A.

As shown in the flow D1, the calculation unit 12 calculates an air-conditioning load for each date and time in a predetermined period by the building load simulation on the basis of the combination of the building structure, the combination of the building operation, the combination of the air-conditioning operation, and the weather information 25.

Upon completing the flow D1, the calculation unit 12 calculates an unprocessed load and the power consumption for each date and time in a predetermined period by the air-conditioning simulation on the basis of the air-conditioning load and the combination of the air-conditioning configuration, as shown in the flow D2.

Upon completing the flow D2, the calculation unit 12 calculates an electricity rate of the environmental control system 100 for each date and time in a predetermined period by predetermined calculation on the basis of the power consumption for each date and time in the predetermined period, as shown in the flow D3.

Upon completing the flow D3, the calculation unit 12 calculates the introduction cost of the facility equipment and the introduction cost of the building member of the target building 90 in a predetermined period by predetermined calculation on the basis of the combination of the air-conditioning configuration and the combination of the building structure, as shown in the flow D4.

Upon completing the flow D4, the calculation unit 12 calculates the maintenance cost of the facility equipment and the maintenance cost of the building member of the target building 90 in a predetermined period by predetermined calculation on the basis of the combination of the building operation and the combination of the air-conditioning operation, as shown in the flow D5.

Upon completing the flow D5, the calculation unit 12 calculates a PMV for each date and time in a predetermined period by predetermined calculation on the basis of the combinations of the set temperature and set humidity for each date and time in a predetermined period and for each air conditioner, the combinations being included in the combination of the air-conditioning operation, and on the basis of the comfort information 28, as shown in the flow D6.

Upon completing the flow D6, the calculation unit 12 substitutes the electricity rate of the environmental control system 100, the introduction cost of the facility equipment, the introduction cost of the building member of the target building 90, the maintenance cost of the facility equipment, and the maintenance cost of the building member of the target building 90 for a term indicating the electricity rate of the environmental control system 100, a term indicating the introduction cost of the facility equipment, a term indicating the introduction cost of the building member of the target building 90, a term indicating the maintenance cost of the facility equipment, and a term indicating the maintenance cost of the building member of the target building 90, respectively, which are included in the total cost of the objective function, as shown in the flow D7. Here, the values calculated for each date and time in a predetermined period are totaled so as to be a predetermined period unit.

Upon completing the flow D7, the calculation unit 12 substitutes the unprocessed load and the PMV for a term indicating the constraint condition related to the unprocessed load and a term indicating the constraint condition related to the PMV, respectively, which are included in the term related to the constraint condition of the objective function, as shown in the flow D8. Here, the values calculated for each date and time in a predetermined period are totaled so as to be a predetermined period unit.

In the above-described manner, the value of the objective function is calculated.

### (3-4-2) Calculation Process of objective function in optimization of building structure, building operation, and air-conditioning operation

The calculation process of the objective function in the case of optimizing the building structure, the building operation, and the air-conditioning operation will be described with reference to the data flow diagram of Fig. 5B. Since the calculation process of the objective function in the case of optimizing the building structure, the building operation, and the air-conditioning operation is basically the same as the calculation process of the objective function in the case of optimizing the air-conditioning configuration, only different parts will be described.

Upon completing the flow D1, the calculation unit 12 calculates an unprocessed load and the power consumption for each date and time in a predetermined period by the air-conditioning simulation on the basis of the air-conditioning load and the combination of the air-conditioning configuration, as shown in the flow D2. Here, the calculation unit 12 further calculates an indoor temperature and an indoor humidity for each date and time in a predetermined period and for each target space 91.

Upon completing the flow D2, the calculation unit 12 determines whether or not the unprocessed load calculated by the air-conditioning simulation is equal to or larger than a reference value, as shown in the flow D21, prior to the flow D3. When the unprocessed load is equal to or larger than the reference value, the calculation unit 12 replaces the combination of the set temperature and set humidity for each date and time in a predetermined period and for each air conditioner, which is included in the combination of the air-conditioning operation, with the combination of the indoor temperature and indoor humidity for each date and time in the predetermined period and for each target space 91, which is calculated by the air-conditioning simulation (replaces the set temperature and set humidity of the air conditioner with the indoor temperature and indoor humidity of the target space 91 in which the air conditioner is present), and performs the flow D1 and the flow D2 again. In other words, the calculation unit 12 repeats the flow D21, the flow D1, and the flow D2 until the unprocessed load calculated by the air-conditioning simulation becomes smaller than the reference value. Further in other words, the calculation unit 12 repeats the flow D21, the flow D1, and the flow D2 until the combination of the indoor temperature and indoor humidity for each date and time in a predetermined period and for each target space 91, which is calculated by the air-conditioning simulation, approaches the combination of the setting temperature and the setting humidity for each date and time in the predetermined period and for each air conditioner.

Upon completing the flow D5, the calculation unit 12 calculates a PMV for each date and time in a predetermined period by a predetermined calculation on the basis of the combinations of the indoor temperature and the indoor humidity for each date and time in the predetermined period and for each target space 91, the combinations being calculated by the air-conditioning simulation, and on the basis of the comfort information 28, as shown in the flow D6.

### (3-5) Output unit

The output unit 14 outputs the combination of the environmental control system 100 having the minimum value of the objective function, as the optimal combination of the environmental control system 100, from the data associating the combinations of the environmental control system 100 and the values of the objective function thereof, the data being accumulated in the optimization history information 27.

### (4) Optimization processing

An example of the optimization processing of the output system 1 will be described with reference to the flowcharts of Fig. 6A, Figs. 6B1 to 6B3, and Fig. 6C.

### (4-1) Overall flow

Fig. 6A illustrates the overall flow of optimization processing.

First, the output system 1 prepares a combination CM1 of the environmental control system 100. The combination CM1 of the environmental control system 100 includes the combination of the initial building structure, the combination of the initial building operation, and the combination of the initial air-conditioning operation, which are stored in the initial setting information 26.

After preparing the combination CM1 of the environmental control system 100, the output system 1 optimizes the combination of the air-conditioning configuration included in the combination CM1 of the environmental control system 100 by the local search method, as shown in Step S1. At this time, the combinations of the building structure, the building operation, and the air-conditioning operation are fixed. Here, the optimized combination of the air-conditioning configuration is referred to as a first optimal air-conditioning configuration, and the combination of the environmental control system 100 including the first optimal air-conditioning configuration is referred to as a combination CM2 of the environmental control system 100.

After outputting the combination CM2 of the environmental control system 100, the output system 1 optimizes the combinations of the building structure, the building operation, and the air-conditioning operation included in the combination CM2 of the environmental control system 100 by the Bayesian optimization, as shown in Step S2. In this case, the combination of the air-conditioning configuration is fixed. Here, the optimized combinations of the building structure, the building operation, and the air-conditioning operation are referred to as an optimal building structure, a minimum building operation, and an optimal air-conditioning operation, respectively, and the combination of the environmental control system 100 including the optimal building structure, the minimum building operation, and the optimal air-conditioning operation is referred to as a combination CM3 of the environmental control system 100.

After outputting the combination CM3 of the environmental control system 100, the output system 1 optimizes the combination of the air-conditioning configuration included in the combination CM3 of the environmental control system 100 by the local search method again, as shown in Step S3. Step S3 is performed to output the more optimal combination of the air-conditioning configuration in accordance with the combinations of the building structure, the building operation, and the air-conditioning operation, which are optimized at Step S2. At this time, the combinations of the building structure, the building operation, and the air-conditioning operation are fixed. Here, the optimized combination of the air-conditioning configuration is referred to as a second optimal air-conditioning configuration, and the combination of the environmental control system 100 including the second optimal air-conditioning configuration is referred to as a combination CM4 of the environmental control system 100.

The combination CM4 of the environmental control system 100 that is output finally is a solution to the optimization problem in the output system 1.

### (4-2) Optimization of air-conditioning configuration by local search method

Here, the details of Step S1 and Step S3 for optimizing the air-conditioning configuration by the local search method will be described with reference to the flowcharts of Figs. 6B1 to 6B3.

As shown in Step S11, the output system 1 resets an initialization count to 0. The initialization count indicates the number of times of initialization.

Upon completing Step S11, the output system 1 selects a combination of the air-conditioning configuration by initialization, as shown in Step S12.

Upon completing Step S12, the output system 1 adds 1 to the initialization count, as shown in Step S13.

Upon completing Step S13, the output system 1 calculates a value of the objective function of the combination of the air-conditioning configuration selected at Step S12, as shown in Step S14.

Upon completing Step S14, the output system 1 stores the combination of the air-conditioning configuration selected at Step S12 and the value of the objective function thereof in the storage device 20 as the optimization history information 27, as shown in Step S15.

Upon completing Step S15, the output system 1 sets the combination of the air-conditioning configuration selected at Step S12 as a search source combination, as shown in Step S16.

Upon completing Step S16, the output system 1 resets the search count to 0, as shown in Step S17. The search count indicates the number of times of neighborhood search performed before the next initialization.

Upon completing Step S17, the output system 1 selects a combination of the air-conditioning configuration by the neighborhood search, as shown in Step S18.

Upon completing Step S18, the output system 1 calculates a value of the objective function of the combination of the air-conditioning configuration selected at Step S18, as shown in Step S19.

Upon completing Step S19, the output system 1 stores the combination of the air-conditioning configuration selected at Step S18 and the value of the objective function thereof in the storage device 20 as the optimization history information 27, as shown in Step S20.

Upon completing Step S20, the output system 1 determines whether or not the value of the objective function of the combination of the air-conditioning configuration selected at Step S18 is smaller than the value of the objective function of the search source combination, as shown in Step S21. When the value of the objective function of the combination of the air-conditioning configuration selected at Step S18 is smaller than the value of the obj ective function of the search source combination, the process proceeds to Step S22. When the value of the objective function of the combination of the air-conditioning configuration selected at Step S18 is not smaller than the value of the objective function of the search source combination, the process proceeds to Step S24.

Once the process proceeds from Step S21 to Step S22, the output system 1 sets the combination of the air-conditioning configuration selected at Step S18 as a search source combination, as shown in Step S22.

Upon completing Step S22, the output system 1 resets the search count to 0, as shown in Step S23.

On the other hand, once the process proceeds from Step S21 to Step S24, the output system 1 adds 1 to the search count, as shown in Step S24.

Upon completing Step S23 or Step S24, the output system 1 determines whether or not the search count is smaller than the number of times of search T1 stored in the initial setting information 26, as shown in Step 25. When the search count is smaller than the number of times of search T1, the process returns to Step S18, and the output system 1 selects again a combination of the air-conditioning configuration by the neighborhood search. When the search count is not smaller than the number of times of search T1, the process proceeds to Step S26.

Once the process proceeds from Step S25 to Step S26, the output system 1 determines whether or not the initialization count is smaller than the number of times of initialization T2 stored in the initial setting information 26, as shown in Step S26. When the initialization count is smaller than the number of times of initialization T2, the process returns to Step S12, and the output system 1 selects again a combination of the air-conditioning configuration by initialization. When the initialization count is not smaller than the number of times of initialization T2, the process proceeds to Step S27.

Once the process proceeds from Step S26 to Step S27, the output system 1 outputs the combination of the air-conditioning configuration having the minimum value of the objective function, as the optimal combination of the air-conditioning configuration, from the data associating the combinations of the air-conditioning configuration and the values of the objective function thereof in an associated manner, the data being accumulated in the optimization history information 27, as shown in Step S27.

### (4-3) Optimization of building structure, building operation, and air-conditioning operation by Bayesian optimization

Here, the details of Step S2 for optimizing the building structure, the building operation, and the air-conditioning operation by the Bayesian optimization will be described with reference to the flowchart of Fig. 6C.

As shown in Step S31, the output system 1 resets a search count to 0. The search count indicates the number of times of selection of a combination of the building structure, the building operation, and the air-conditioning operation on the basis of the predicted objective function.

Upon completing Step S31, the output system 1 randomly selects a plurality of combinations of the building structure, the building operation, and the air-conditioning operation, as shown in Step S32.

Upon completing Step S32, the output system 1 calculates a value of the objective function for each of the combinations of the building structures, the building operations, and the air-conditioning operations selected at Step S32, as shown in Step S33.

Upon completing Step S33, the output system 1 stores the combinations of the building structure, the building operation, and the air-conditioning operation selected at Step S32 and the values of the objective functions thereof in the storage device 20 as the optimization history information 27, as shown in Step S34.

Upon completing Step S34, the output system 1 determines whether or not the search count is smaller than the number of times of search T3 stored in the initial setting information 26, as shown in Step 35. When the search count is smaller than the number of times of search T3, the process proceeds to Step S36. When the search count is not smaller than the number of times of search T3, the process proceeds to Step S39.

Once the process proceeds from Step S35 to Step S36, the output system 1 predicts an objective function on the basis of the data associating the combinations of the building structure, the building operation, and the air-conditioning operation and the values of the objective function thereof, the data being accumulated in the optimization history information 27, as shown in Step S36.

Upon completing Step S36, the output system 1 selects a combination of the building structure, the building operation, and the air-conditioning operation having a possibility that the value of the objective function becomes the smallest, on the basis of the predicted objective function, as shown in Step S37.

Upon completing Step S37, the output system 1 adds 1 to the search count, as shown in Step S38.

Upon completing Step S38, the process is returned to Step 33, and the output system 1 calculates a value of the objective function for the combination of the building structure, the building operation, and the air-conditioning operation selected at Step S38.

Thereafter, the output system 1 repeats Steps S33 to S38 until it is determined at Step S35 that the search count is not smaller than the number of times of search T3.

Meanwhile, once the process proceeds from Step S35 to Step S39, the output system 1 outputs the combination of the building structure, the building operation, and the air-conditioning operation having the minimum value of the objective function, as the optimal combination of the building structure, the building operation, and the air-conditioning operation, from the data associating the combinations of the building structure, the building operation, and the air-conditioning operation and the values of the objective function thereof, the data being accumulated in the optimization history information 27, as shown in Step S39.

### (5) Characteristics

(5-1)
In the related art, there is a technique for outputting a system configuration with which the cost is reduced from among a plurality of system configurations related to air conditioners. The cost depends not only on the system configuration but also on the operation conditions. Therefore, there is a problem that it is not sufficient to evaluate the cost on the basis of the system configuration as in the related art.

The output system 1 of the present embodiment outputs the system configuration of the environmental control system 100 that controls the environment of the target space 91 in the target building 90. The output system 1 includes the selection unit 11, the calculation unit 12, and the output unit 14. The selection unit 11 selects a plurality of candidates for each of the system configuration and the operation condition of the environmental control system 100. The calculation unit 12 calculates a PMV (environmental index) and a total cost (cost) for the combination of the system configuration candidate and the operation condition candidate that are selected by the selection unit 11. The output unit 14 outputs a system configuration corresponding to the PMV and the total cost where the objective function is minimum among the PMVs and the total costs calculated by the calculation unit 12.

As a result, the output system 1 can evaluate the total cost on the basis of not only the system configuration but also the operation condition.

(5-2)
In the output system 1 of the present embodiment, the output unit 14 further outputs an operation condition corresponding to the PMV and the total cost where the objective function is minimum among the PMVs and the total costs calculated by the calculation unit 12.

(5-3)
In the output system 1 of the present embodiment, the system configuration includes a configuration related to the facility equipment installed in the target building 90 and a configuration related to the target building 90. The facility equipment includes the air conditioner.

(5-4)
In the output system 1 of the present embodiment, the facility equipment further includes the sunlight shielding device, the lighting device, and the heating device.

(5-5)
In the output system 1 of the present embodiment, the operation conditions include a condition related to an operation schedule of the facility equipment, a condition related to the environmental target setting of the air conditioner, a condition related to the maintenance of the facility equipment, and a condition related to the maintenance of the building member of the target building 90.

(5-6)
In the output system 1 of the present embodiment, the total cost includes the electricity rate of the environmental control system 100, the introduction cost of the facility equipment, the maintenance cost of the facility equipment, the introduction cost of the building member of the target building 90, and the maintenance cost of the building member of the target building 90.

(5-7)
In the output system 1 of the present embodiment, the selection unit 11 alternately selects a plurality of candidates for the air-conditioning configuration, which is a configuration related to the air conditioner, and a plurality of candidates for the operation condition.

(5-8)
The output system 1 of the present embodiment further includes the storage unit 13. The selection unit 11 selects a plurality of first candidates for the air-conditioning configuration, which is a configuration related to the air conditioner. The calculation unit 12 calculates the PMV and the total cost for the combinations of the plurality of first candidates selected by the selection unit 11 and the candidates including a predetermined operation condition. The storage unit 13 stores the plurality of first candidates and each of the PMVs and the total costs in an associated manner. The output unit 14 outputs a first air-conditioning configuration corresponding to the PMV and the total cost where the objective function is minimum among the PMVs and the total costs stored in the storage unit 13. In the environmental control system 100 to which the first air-conditioning configuration is applied, the selection unit 11 selects a plurality of second candidates including an operation condition. The calculation unit 12 calculates the PMV and the total cost for the combinations of the plurality of second candidates selected by the selection unit 11 and the candidate including the first air-conditioning configuration. The storage unit 13 stores the plurality of second candidates and each of the PMVs and the total costs in an associated manner. The output unit 14 outputs a candidate including the first operation condition corresponding to the PMV and the total cost where the objective function is minimum among the PMVs and the total costs stored in the storage unit 13. In the environmental control system 100 to which the candidate including the first operation condition is applied, the selection unit 11 selects a plurality of third candidates for the air-conditioning configuration. The calculation unit 12 calculates the PMV and the total cost for the combinations of the plurality of third candidate selected by the selection unit 11 and the candidate including the first operation condition. The storage unit 13 stores the plurality of third candidates and each of the PMVs and the total costs in an associated manner. The output unit 14 outputs a second air-conditioning configuration corresponding to the PMV and the total cost where the objective function is minimum among the PMVs and the total costs stored in the storage unit 13.

(5-9)
In the output system 1 of the present embodiment, the candidates including the operation condition include a configuration related to the facility equipment except for the air conditioner, a building structure, an operation condition related to the facility equipment except for the air conditioner, and an operation condition related to the building structure.

(5-10)
In the output system 1 of the present embodiment, the selection unit 11 selects a plurality of candidates for the air-conditioning configuration by the local search method. The selection unit 11 selects a plurality of candidates for the building structure, the building operation, and the operation condition by the Bayesian optimization. As a result, the output system 1 can efficiently solve the optimization problem by selectively using the optimization algorithm in accordance with the calculation cost.

(5-11)
The output method of the present embodiment outputs the system configuration of the environmental control system 100 that controls the environment of the target space 91 in the target building 90. The output method includes the selection steps S12, S18, S32, and S37, the calculation steps S14, S19, and S33, and the output steps S27 and S39. The selection steps S12, S18, S32, and S37 select a plurality of candidates for each of the system configuration and the operation condition of the environmental control system 100. The calculation steps S14, S19 and S33 calculate the PMV and the total cost with for the combinations of the system configuration candidate and the operation condition candidate that are selected at the selection steps S12, S18, S32, and S37. The output steps S27 and S39 output a system configuration corresponding to the PMV and the total cost where the objective function is minimum among the PMVs and the total costs calculated at the calculation steps S14, S19, and S33.

(5-12)
In the output method of the present embodiment, the output steps S27 and S39 further output an operation condition corresponding to the PMV and the total cost where the objective function is minimum among the PMVs and the total costs calculated at the calculation steps S14, S19, and S33.

(5-13)
The output method of the present embodiment further includes the storage steps S 15, S20, and S34. The system configuration includes a configuration related to the facility equipment installed in the target building 90 and a configuration related to the target building 90. The facility equipment includes the air conditioner. The selection steps S12, S18, S32, and S37 select a plurality of first candidates for the air-conditioning configuration, which is a configuration related to the air conditioner. The calculation steps S14, S19, and S33 calculate the PMV and the total cost for the combinations of the plurality of first candidates selected at the selection steps S12, S18, S32, and S37 and candidates including a predetermined operation condition. The storage steps S15, S20, and S34 store the plurality of first candidates and each of the PMVs and the total costs in an associated manner. The output steps S27 and S39 output a first air-conditioning configuration corresponding to the PMV and the total cost where the objective function is minimum among the PMVs and the total costs stored at the storage steps S15, S20, and S34. In the environmental control system 100 to which the first air-conditioning configuration is applied, the selection steps S12, S18, S32, and S37 select a plurality of second candidates including an operation condition. The calculation steps S14, S19, and S33 calculate the PMV and the total cost for the combinations of the plurality of second candidates selected at the selection steps S12, S18, S32, and S37 and candidates including the first air-conditioning configuration. The storage steps S15, S20, and S34 store the plurality of second candidates and each of the PMVs and the total costs in an associated manner. The output steps S27 and S39 output a candidate including the first operation condition corresponding to the PMV and the total cost where the objective function is minimum among the PMVs and the total costs stored at the storage steps S15, S20, and S34.

(5-14)
The output program of the present embodiment is recorded in a computer-readable storage device 20 (recording medium). The output program causes the computer to output the system configuration of the environmental control system 100 that controls the environment of the target space 91 in the target building 90. The output program includes the selection steps S12, S18, S32, and S37, the calculating steps S14, S19, and S33, and the output steps S27 and S39. The selection steps S12, S18, S32, and S37 select a plurality of candidates for each of the system configuration and the operation condition of the environmental control system 100. The calculation steps S14, S19 and S33 calculate the PMV and the total cost with for the combinations of the system configuration candidate and the operation condition candidate that are selected at the selection steps S12, S18, S32, and S37. The output steps S27 and S39 output a system configuration corresponding to the PMV and the total cost where the objective function is minimum among the PMVs and the total costs calculated at the calculation steps S14, S19, and S33.

(5-15)
In the output program of the present embodiment, the output steps S27 and S39 further output an operation condition corresponding to the PMV and the total cost where the objective function is minimum among the PMVs and the total costs calculated at the calculation steps S14, S19, and S33.

### (6) Modification

### (6-1) Modification 1A

In the present embodiment, the term related to the constraint conditions includes a term indicating the constraint condition related to the PMV and a term indicating the constraint condition related to an unprocessed load. However, the term related to the constraint conditions may further include at least one of the terms among a term indicating a constraint condition related to the capacity or performance of the air conditioner, a term indicating a constraint condition related to the connection configuration of the air conditioner, and a term indicating a constraint condition related to the performance of the building member of the target building 90. Here, the output unit 14 outputs the system configuration and the operation condition so as to satisfy at least one of the constraint conditions among a constraint condition related to the capacity or performance of the air conditioner, a constraint condition related to the connection configuration of the air conditioner, and a constraint condition related to the performance of the building member of the target building 90.

The constraint condition related to the capacity or performance of the air conditioner is, for example, a condition that restricts a ventilation amount by the ventilator to be larger than a reference value.

As the ventilation amount by the ventilator calculated from the combination of the air-conditioning configuration becomes larger than a reference value, the value of the term indicating the constraint condition related to the capacity or performance of the air conditioner becomes smaller.

The constraint condition related to the connection configuration of the air conditioner is, for example, a condition that restricts the capacities of the indoor unit and the outdoor unit connected to each other to be within a specified range. As the capacities of the indoor unit and the outdoor unit connected to each other, which are calculated from the combination of the air-conditioning configuration, fall within a specified range, the value of the term indicating the constraint condition related to the connection configuration of the air conditioner becomes smaller.

### (6-2) Modification 1B

In the present embodiment, the term related to the constraint conditions includes a term indicating a constraint condition related to the PMV (index related to thermal comfort) as an environmental index. However, the term related to the constraint conditions may further include a term indicating a constraint condition related to the temperature, the humidity, the airflow, the cleanliness, or the heat radiation as environmental indices.

The constraint condition related to the temperature, the humidity, the airflow, the cleanliness, or the heat radiation is, for example, a condition that restricts the temperature, the humidity, the airflow, the cleanliness, or the heat radiation for each date and time in a predetermined period and for each target space 91, which is calculated using the building load simulation and the air-conditioning simulation from the combination of the environmental control system 100, to fall within a specified range. As the temperature, the humidity, the airflow, the cleanliness, or the heat radiation calculated from the combination of the environmental control system 100 falls within the specified range, the value of the term indicating the constraint condition related to the temperature, the humidity, the airflow, the cleanliness, or the heat radiation becomes smaller.

### (6-3) Modification 1C

In the present embodiment, the objective function includes the total cost and the term related to the constraint condition such as the PMV or the unprocessed load. However, the output system 1 may convert the term related to the constraint condition into an amount of money and include the amount of money in the objective function as a part of the total cost.

Here, the amount of money corresponding to the term related to the constraint condition is configured to be lower as the constraint condition is satisfied.

### (6-4) Modification 1D

Each term included in the objective function, such as the term indicating the introduction cost of the facility equipment and the term related to the constraint condition of the PMV, may be multiplied by a weight coefficient. Here, for example, the weight coefficient of the term related to the constraint condition of the PMV is increased, and the weight coefficient of the term indicating the introduction cost of the facility equipment is decreased, thereby outputting the combination of the environmental control system 100 in which the PMV is regarded as more important than the reduction of the introduction cost of the facility equipment.

As a result, the output system 1 can output a combination of the environmental control system 100 in which the desired term included in the objective function is regarded as more important.

### (6-5) Modification 1E

In the present embodiment, the building structure, the building operation, and the air-conditioning operation are optimized by the Bayesian optimization. However, since the building operation and the air-conditioning operation include the combination for each date and time in a predetermined period, the number of combinations when optimization is performed is enormous.

Therefore, the optimization of the building structure, the building operation, and the air-conditioning operation may be performed for each predetermined date and time. As a result, the output system 1 can solve the optimization problem more efficiently.

Here, as shown in Fig. 2, the output system 1 further includes an extraction unit 15 as a functional block of the control arithmetic device 10. The extraction unit 15 extracts a date and time where the value of the objective function is the maximum.

An example of the optimization processing of the output system 1 in the present modification will be described with reference to a flowchart of Fig. 6D.

As shown in Step S41, the output system 1 resets a date and time extraction count to 0. The date and time extraction count indicates the number of times of extraction of date and time by the extraction unit 15.

Upon completing Step S41, the output system 1 calculates a value of the objective function of the combination CM2 of the environmental control system 100 in Fig. 6A for each date and time in a predetermined period, and extracts the date and time where the value of the objective function is the maximum, as shown in Step S42.

Upon completing Step S42, the output system 1 adds 1 to the date and time extraction count, as shown in Step S43.

Upon completing Step S43, the output system 1 optimizes only the combinations of the building structure, the building operation, and the air-conditioning operation related to the date and time extracted at Step S42 by the Bayesian optimization, as shown in Step S44. The optimization is continued until the value of the objective function on the date and time extracted at Step S42 is not the maximum among the values of the objective function on all the dates and times.

Upon completing Step S44, the output system 1 determines whether or not the date and time extraction count is smaller than the number of times of extraction T4, as shown in Step 45. When the date and time extraction count is smaller than the number of times of extraction T4, the process returns to Step S42, and the date and time where the value of the objective function is the maximum is extracted again. When the date and time extraction count is not smaller than the number of times of extraction T4, the process proceeds to Step S46.

Once the process proceeds from Step S45 to Step S46, the output system 1 outputs optimal combinations of the building structure, the building operation, and the air-conditioning operation optimized for each date and time in a predetermined period, as shown in Step S46.

In other words, in the environmental control system 100 to which the first air-conditioning configuration is applied, the calculation unit 12 calculates the PMV and the total cost for the combination of the first air-conditioning configuration and the candidate including the operation condition. The extraction unit 15 extracts the first date and time corresponding to the PMV and the total cost at which the objective function is maximum among the PMVs and the total costs calculated by the calculation unit 12. The selection unit 11 selects a plurality of candidates including the operation condition on the first date and time.

### (6-6) Modification 1F

In the present embodiment, the output system 1 calculates a value of the objective function for each of the combination candidates of the environmental control system 100 selected by the selection unit 11. However, the output system 1 may not calculate the value of the objective function for all the combination candidates of the environmental control system 100 selected by the selection unit 11. For example, when calculating a value of the objective function of the combination candidate, the output system 1 first calculates a PMV When the PMV is extremely out of a specified range, the output system 1 does not calculate a value of the objective function of the combination candidate, and calculates a value of the objective function of the next combination candidate.

As a result, the output system 1 can assign more flexible conditions to the combinations of the environmental control system 100. In addition, the output system 1 can suppress the calculation cost.

### (6-7) Modification 1G

In the present embodiment, the facility equipment includes the sunlight shielding device, the lighting device, and the heating device in addition to the air conditioner. However, the facility equipment may include not all but only some of the sunlight shielding device, the lighting device, and the heating device in addition to the air conditioner.

### (6-8) Modification 1H

In the present embodiment, the operation conditions include a condition related to the operation schedule of the facility equipment, a condition related to the environmental target setting of the air conditioner, a condition related to the maintenance of the facility equipment, and a condition related to the maintenance of the building member of the target building 90. However, the operation conditions may include not all but some of the condition related to the operation schedule of the facility equipment, the condition related to the environmental target setting of the air conditioner, the condition related to the maintenance of the facility equipment, and the condition related to the maintenance of the building member of the target building 90.

### (6-9) Modification 1I

In the present embodiment, the total cost includes the electricity rate of the environmental control system 100, the introduction cost of the facility equipment, the maintenance cost of the facility equipment, the introduction cost of the building member of the target building 90, and the maintenance cost of the building member of the target building 90. However, the total cost may include values correlated with the electricity rate of the environmental control system 100, the introduction cost of the facility equipment, the maintenance cost of the facility equipment, the introduction cost of the building member of the target building 90, or the maintenance cost of the building member of the target building 90.

(6-10)
While embodiments of the present disclosure have been described above, it will be understood that various changes in form and detail may be made therein without departing from the spirit and scope of the present disclosure as set forth in the claims.

### REFERENCE SIGNS LIST

1 output system
11 selection unit
12 calculation unit
13 storage unit
14 output unit
15 extraction unit
20 storage device (storage medium)
90 target building
91 target space
100 environmental control system
S12, S18, S32, S37 selection step
S14, S19, S33 calculation step
S15, S20, S34 storage step
S27, S39 output step

### CITATION LIST

### PATENT LITERATURE

PTL 1: Japanese Unexamined Patent Application Publication No. 2009-20640

## Claims

1. An output system (1) outputting a system configuration of an environmental control system (100) controlling an environment of a target space (91) in a target building (90), the output system (1) comprising:
a selection unit (11) configured to select a plurality of candidates for each of the system configuration and an operation condition of the environmental control system (100);
a calculation unit (12) configured to calculate an environmental index and a cost for a combination of a candidate for the system configuration and a candidate for the operation condition that are selected by the selection unit; and
an output unit (14) configured to output the system configuration such that the environmental index and the cost that are calculated by the calculation unit satisfy a predetermined condition.

2. The output system (1) according to claim 1, wherein the output unit further outputs the operation condition such that the environmental index and the cost that are calculated by the calculation unit satisfy the predetermined condition.

3. The output system (1) according to claim 1 or 2, wherein
the system configuration includes a configuration related to facility equipment installed in the target building and a configuration related to the target building, and
the facility equipment includes an air conditioner.

4. The output system (1) according to claim 3, wherein the facility equipment further includes a sunlight shielding device, a lighting device, or a heating device.

5. The output system (1) according to claim 3 or 4, wherein the operation condition includes a condition related to an operation schedule of the facility equipment, a condition related to an environmental target setting of the air conditioner, a condition related to maintenance of the facility equipment, or a condition related to maintenance of a building member of the target building.

6. The output system (1) according to any one of claims 3 to 5, wherein the output unit outputs the system configuration and the operation condition so as to further satisfy at least one of conditions among a condition related to capacity or performance of the air conditioner, a condition related to a connection configuration of the air conditioner, and a condition related to performance of a building member of the target building.

7. The output system (1) according to any one of claims 3 to 6, wherein the cost includes values correlated with an electricity rate, an introduction cost of the facility equipment, a maintenance cost of the facility equipment, an introduction cost of a building member of the target building, or a maintenance cost of the building member of the target building.

8. The output system (1) according to any one of claims 1 to 7, wherein the environmental index is an index related to thermal comfort, a temperature, a humidity, an airflow, cleanliness, or thermal radiation.

9. The output system (1) according to any one of claims 1 to 8, wherein the predetermined condition satisfied by the cost is a condition for outputting the system configuration and the operation condition with which the cost is reduced.

10. The output system (1) according to any one of claims 3 to 7, wherein the selection unit alternately selects a plurality of candidates for an air-conditioning configuration as a configuration related to the air conditioner and a plurality of candidates for the operation condition.

11. The output system (1) according to claim 10, further comprising:
a storage unit (13), wherein
the selection unit selects a plurality of first candidates for the air-conditioning configuration as the configuration related to the air conditioner,
the calculation unit calculates a first environmental index and a first cost for a combination of the plurality of first candidates selected by the selection unit and a candidate including the operation condition that is predetermined,
the storage unit stores the plurality of first candidates and each of the first environmental index and the first cost in an associated manner,
the output unit outputs a first air-conditioning configuration such that the first environmental index and the first cost that are stored in the storage unit satisfy the predetermined condition,
in the environmental control system with the first air-conditioning configuration applied,
the selection unit selects a plurality of second candidates including the operation condition,
the calculation unit calculates a second environmental index and a second cost for a combination of the plurality of second candidates selected by the selection unit and a candidate including the first air-conditioning configuration,
the storage unit stores the plurality of second candidates and each of the second environmental index and the second cost in an associated manner, and
the output unit outputs a candidate including a first operation condition such that the second environmental index and the second cost that are stored in the storage unit satisfy the predetermined condition, and
in the environmental control system with the candidate including the first operation condition applied,
the selection unit selects a plurality of third candidates for the air-conditioning configuration,
the calculation unit calculates a third environmental index and a third cost for a combination of the plurality of third candidates selected by the selection unit and the candidate including the first operation condition,
the storage unit stores the plurality of third candidates and each of the third environmental index and the third cost in an associated manner, and
the output unit outputs a second air-conditioning configuration such that the third environmental index and the third cost that are stored in the storage unit satisfy the predetermined condition.

12. The output system (1) according to claim 11, wherein the candidate including the operation condition includes the configuration related to the facility equipment except for the air conditioner, the building structure, the operation condition related to the facility equipment except for the air conditioner, and the operation condition related to the building structure.

13. The output system (1) according to claim 11 or 12, wherein the selection unit selects the plurality of candidates for the air-conditioning configuration by a local search method, and selects a plurality of candidates including the operation condition by Bayesian optimization.

14. The output system (1) according to any one of claims 11 to 13, further comprising:
an extraction unit configured to extract a date and time on which the environmental index and the cost become a predetermined value, wherein
in the environmental control system with the first air-conditioning configuration applied,
the calculation unit calculates a fourth environmental index and a fourth cost for a combination of the first air-conditioning configuration and the candidate including the operation condition,
the extraction unit extracts a first date and time on which the fourth environmental index and the fourth cost that are calculated by the calculation unit become a predetermined value, and
the selection unit selects a plurality of second candidates including the operation condition on the first date and time.

15. An output method outputting a system configuration of an environmental control system (100) controlling an environment of a target space (91) in a target building (90), the output method comprising:
a selection step (S12, S18, S32, S37) of selecting a plurality of candidates for each of the system configuration and an operation condition of the environmental control system;
a calculation step (S14, S19, S33) of calculating an environmental index and a cost for a combination of a candidate for the system configuration and a candidate for the operation condition that are selected at the selection step; and
an output step (S27, S39) of outputting the system configuration such that the environmental index and the cost that are calculated at the calculation step satisfy a predetermined condition.

16. The output method according to claim 15, wherein the output step further outputs the operation condition such that the environmental index and the cost that are calculated at the calculation step satisfy the predetermined condition.

17. The output method according to claim 16, further comprising:
a storage step (S15, S20, S34), wherein
the system configuration includes a configuration related to facility equipment installed in the target building and a configuration related to the target building,
the facility equipment includes an air conditioner,
the selection step selects a plurality of first candidates for an air-conditioning configuration as a configuration related to the air conditioner,
the calculation step calculates a first environmental index and a first cost for a combination of the plurality of first candidates selected at the selection step and a candidate including the operation condition that is predetermined,
the storage step stores the plurality of first candidates and each of the first environmental index and the first cost in an associated manner,
the output step outputs a first air-conditioning configuration such that the first environmental index and the first cost that are stored in the storage step satisfy the predetermined condition, and
in the environmental control system with the first air-conditioning configuration applied,
the selection step selects a plurality of second candidates including the operation condition,
the calculation step calculates a second environmental index and a second cost for a combination of the plurality of second candidates selected at the selection step and a candidate including the first air-conditioning configuration,
the storage step stores the plurality of second candidates and each of the second environmental index and the second cost in an associated manner, and
the output step outputs a candidate including a first operation condition such that the second environmental index and the second cost that are stored in the storage step satisfy the predetermined condition.

18. An output program causing a computer to output a system configuration of an environmental control system (100) controlling an environment of a target space (91) in a target building (90), the output program comprising:
a selection step (S12, S18, S32, S37) of selecting a plurality of candidates for each of the system configuration and an operation condition of the environmental control system;
a calculation step (S14, S19, S33) of calculating an environmental index and a cost for a combination of a candidate for the system configuration and a candidate for the operation condition that are selected at the selection step; and
an output step (S27, S39) of outputting the system configuration such that the environmental index and the cost that are calculated at the calculation step satisfy a predetermined condition.

19. The output program according to claim 18, wherein the output step further outputs the operation condition such that the environmental index and the cost that are calculated at the calculation step satisfy the predetermined condition.

20. A computer-readable recording medium (20) with an output program recorded therein, the output program causing a computer to output a system configuration of an environmental control system (100) controlling an environment of a target space (91) in a target building (90), the output program comprising:
a selection step (S12, S18, S32, S37) of selecting a plurality of candidates for each of the system configuration and an operation condition of the environmental control system;
a calculation step (S14, S19, S33) of calculating an environmental index and a cost for a combination of a candidate for the system configuration and a candidate for the operation condition that are selected at the selection step; and
an output step (S27, S39) of outputting the system configuration such that the environmental index and the cost that are calculated at the calculation step satisfy a predetermined condition.

21. The computer-readable recording medium (20) with the output program recorded therein according to claim 20, wherein the output step further outputs the operation condition such that the environmental index and the cost that are calculated at the calculation step satisfy the predetermined condition.
